# FASCICULE DE BREVET EUROPEEN

(11) **EP 3 819 148 B1**
(45) Date de publication et mention de la délivrance du brevet: **26.02.2025**
(21) Numéro de dépôt: 20205725.3
(22) Date de dépôt: 04.11.2020
(51) Int. Cl.: B60K 1/00, B60K 11/06, H02K 1/20, H02K 5/20, H02K 9/04

(54) **DISPOSITIF DE REFROIDISSEMENT D'UN MOTEUR ÉLECTRIQUE DE TRACTION D'UN VÉHICULE, ENSEMBLE DE MOTORISATION, VÉHICULE ET PROCÉDÉ DE REMPLACEMENT ASSOCIÉS**
KÜHLVORRICHTUNG FÜR EINEN ELEKTRISCHEN ANTRIEBSMOTOR EINES FAHRZEUGS, ENTSPRECHENDE ANTRIEBSANORDNUNG, ENTSPRECHENDES FAHRZEUG UND AUSTAUSCHVERFAHREN
DEVICE FOR COOLING AN ELECTRIC TRACTION MOTOR OF A VEHICLE, ASSOCIATED MOTOR ASSEMBLY, VEHICLE AND REPLACEMENT METHOD

(30) Priorité: 06.11.2019 FR 1912459
(43) Date de publication de la demande: 12.05.2021
(73) Titulaire: ALSTOM Holdings, 93400 Saint-Ouen-sur-Seine (FR)
(72) Inventeur: GUIGNIER, Gilles, 90000 BELFORT (FR); RAGUIN, Bruno, 25290 ORNANS (FR)
(74) Mandataire: Lavoix

(56) Documents cités:
- EP-A1- 3 093 962
- DE-A1- 102010 036 831
- FR-A1- 3 000 628
- JP-A- 2005 333 795
- JP-A- H0 255 552

## Description

La présente invention concerne un dispositif de refroidissement d'un moteur électrique de traction d'un véhicule.

L'invention concerne également un ensemble de motorisation comprenant un tel dispositif de refroidissement.

L'invention concerne également un véhicule comprenant un tel ensemble de motorisation.

L'invention concerne aussi un procédé de remplacement d'un tel dispositif de refroidissement d'un ensemble de motorisation.

Le véhicule est par exemple un véhicule ferroviaire, ou, en variante, un véhicule automobile, aérien ou maritime.

Il est nécessaire de refroidir un moteur électrique de traction lorsque celui-ci fonctionne afin d'éviter toute surchauffe et ainsi de garantir son bon fonctionnement.

On connait du document FR 3 000 628 un dispositif de refroidissement d'un dispositif d'entrainement d'une roue d'avion.

De plus, il est connu de fixer de façon rigide un ventilateur au moteur électrique de traction afin de le refroidir lors de son fonctionnement. Le ventilateur est couplé directement au rotor du moteur électrique de traction et tourne en même temps que celui-ci. Ainsi le ventilateur permet de créer un flux d'air refroidissant le moteur électrique de traction par convection forcée.

Toutefois, les performances d'un tel ventilateur en termes de refroidissement, de pertes de charge et de bruit ne sont pas suffisantes. En effet, il est impossible d'ajuster la géométrie du ventilateur pour l'ensemble de la plage de fonctionnement du moteur électrique et il est impossible de contrôler la vitesse de rotation du ventilateur de manière indépendante, notamment par rapport au moteur électrique. En outre, la maintenance d'un tel ventilateur est fastidieuse car elle nécessite de démonter l'ensemble du moteur et peut impliquer la dépose du moteur.

Un des objectifs de l'invention est de proposer un dispositif de refroidissement d'un moteur électrique de traction d'un véhicule présentant des performances de refroidissement améliorées tout en réduisant le bruit engendré par le fonctionnement du ventilateur et permettant une maintenance aisée.

A cet effet, l'invention a pour objet un dispositif de refroidissement selon la revendication 1.

Selon des modes de réalisation particuliers de l'invention, le dispositif de refroidissement présente également une ou plusieurs des caractéristiques des revendications 2 à 5.

L'invention a également pour objet un ensemble de motorisation selon la revendication 6.

Selon des modes de réalisation particuliers de l'invention, l'ensemble de motorisation présente également une ou plusieurs des caractéristiques 7 ou 8.

L'invention a également pour objet un véhicule, notamment un véhicule ferroviaire, comprenant au moins un ensemble de motorisation tel que défini ci-dessus.

L'invention a également pour objet un procédé de remplacement comprenant les étapes suivantes :
- fourniture d'un ensemble de motorisation tel que défini ci-dessus,
- détachement et remplacement du dispositif de refroidissement par un autre dispositif de refroidissement tel que défini ci-dessus.

L'invention et ses avantages seront mieux compris à la lecture de la description qui va suivre, donnée uniquement à titre d'exemple non limitatif, et faite en référence aux dessins annexés, sur lesquels :
- **[****Fig 1****]** la figure 1 est une représentation schématique de côté d'un véhicule ferroviaire; et
- **[****Fig 2****]** la figure 2 est une vue en perspective d'un ensemble de motorisation embarqué dans le véhicule ferroviaire de la figure 1 ;
- **[****Fig 3****]** la figure 3 est une vue en perspective du dispositif de refroidissement de l'ensemble de motorisation de la figure 2 ; et
- **[****Fig 4****]** la figure 4 est une vue en coupe de l'ensemble de motorisation de la figure 2.

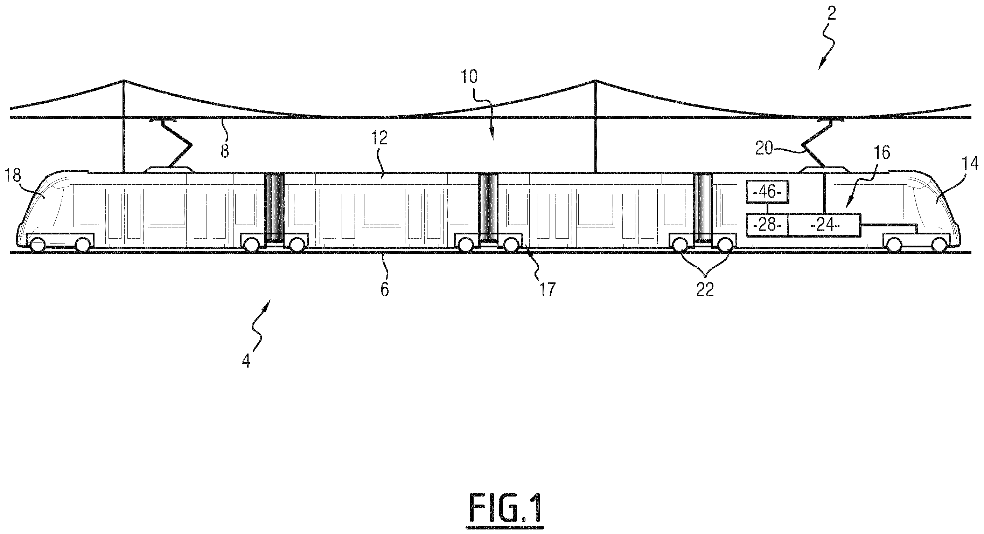

Un système ferroviaire 2 comprenant une infrastructure ferroviaire 4 et un véhicule ferroviaire 10 est illustré sur la figure 1.

L'infrastructure ferroviaire 4 comprend des rails 6 et une caténaire 8.

La caténaire 8 est un dispositif d'alimentation électrique suspendue au-dessus des rails 6 et constituée d'un ou de deux fils de contact électriquement conducteurs et de câbles porteurs.

Par la suite, seul le véhicule ferroviaire 10 sera décrit mais l'homme du métier comprendra que l'invention s'applique à tout type de véhicule tel qu'un véhicule automobile, aérien ou maritime.

Le véhicule ferroviaire 10 est configuré pour permettre le transport de voyageurs et/ou de marchandises.

Comme visible sur la figure 1, le véhicule ferroviaire 10 comporte au moins une voiture de transport 12 de voyageurs et/ou de marchandises, une voiture de tête 14 et au moins un ensemble de motorisation 16 embarqué dans le véhicule 10.

Avantageusement, le véhicule 10 comprend en outre une voiture de queue 18 située à l'extrémité opposée de la voiture de tête 14.

Le véhicule comprend en outre au moins un pantographe 20 disposé sur l'une des voitures 12, 14, 18. Le pantographe 20 est un dispositif articulé configuré pour capter un courant électrique par frottement sur la caténaire 8.

Chaque voiture 12, 14, 18 s'étend suivant une direction longitudinale et possède deux extrémités longitudinales.

Le véhicule 10 comprend des bogies 17. Chaque bogie 17 supporte une voiture 12, 14, 18 reposant sur ce bogie 17 ou supporte deux voitures 12, 14, 18 voisines reposant par leurs extrémités longitudinales voisines sur ce bogie 17 (on parle alors de « bogie commun »).

Chaque bogie 17 comprend des roues 22 fixées au bogie 17 par des arbres non représentés sur les figures. Les roues 22 sont configurées pour rouler sur les rails 6 et ainsi permettre le déplacement du véhicule ferroviaire 10.

La voiture de tête 14 définit une extrémité de tête du véhicule ferroviaire 10.

La voiture de tête 14 est ici une voiture motrice ou locomotive, configurée pour fournir l'énergie motrice du véhicule 10, i.e. pour pousser ou tracter les voitures 12.

A cet effet, le ou l'un des ensemble(s) de motorisation 16 est embarqué dans la voiture de tête 14.

Dans un mode de réalisation avantageux, le véhicule ferroviaire 10 est configuré pour circuler dans les deux sens. La voiture de queue 18 est alors également une locomotive apte à remorquer les autres voitures 12, 14.

L'un des ensemble(s) de motorisation 16 est alors embarqué dans la voiture de queue 20.

Avantageusement, l'un des ensembles de motorisation 16 est en outre embarqué dans au moins une des voitures de transport 12.

L'ensemble de motorisation 16 s'étend principalement selon un axe principal A-A'.

L'ensemble de motorisation 16 comprend un moteur électrique 24, un carter 26 entourant le moteur 24, au moins un canal de refroidissement 27 et un dispositif de refroidissement 28.

Avantageusement, l'ensemble de motorisation 16 comprend en outre un dispositif de mesure de vitesse 30 configuré pour mesurer la vitesse de rotation du moteur électrique 24.

Le moteur électrique 24 est alimenté électriquement par le courant électrique capté par le pantographe 20.

Le moteur électrique 24 est un moteur de traction du véhicule 10. Le moteur électrique 24 est configuré pour convertir l'énergie électrique reçue en énergie mécanique permettant la rotation des roues 22 et ainsi le déplacement du véhicule 10.

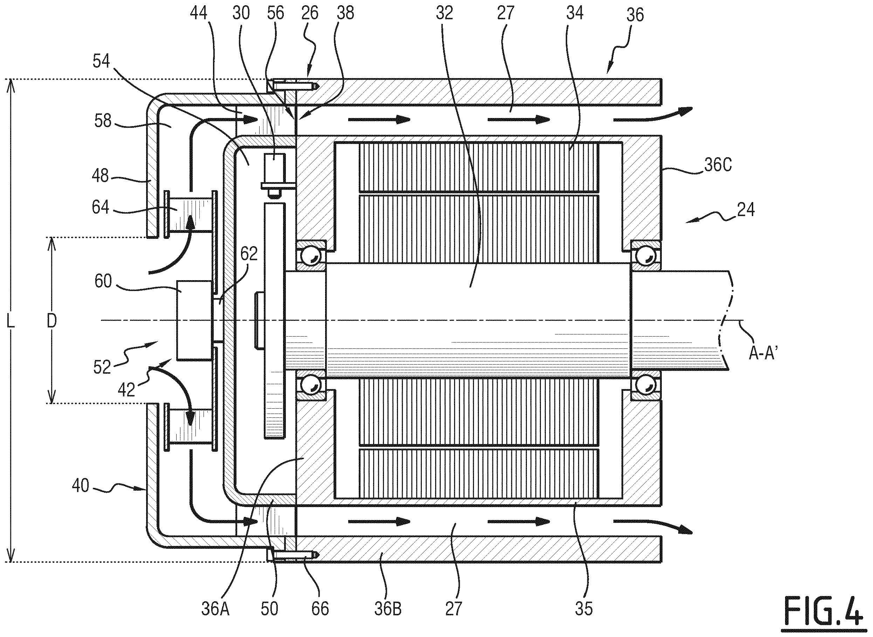

Dans l'exemple illustré sur la figure 4, le moteur électrique 24 est une machine électrique triphasée comportant un rotor 32, un stator 34 et une cloison extérieure 35.

Le rotor 32 est de forme générale cylindrique et s'étend le long de l'axe principal A-A'. Le rotor 32 est monté rotatif par rapport au stator 34.

Le stator 34 s'étend autour du rotor 32.

De préférence, la machine électrique tournante 32 est une machine synchrone.

En variante, la machine électrique tournante 32 est une machine synchrone.

La cloison extérieure 35 s'étend autour du stator 34 et protège l'intérieur du moteur électrique 24.

Le carter 26 comprend une paroi 36 entourant le moteur 24.

Le carter 26 comprend une paroi latérale 36A entourant le moteur 24, une paroi avant 36B et une paroi arrière 36C.

La section perpendiculaire à l'axe principal A-A' de la paroi latérale 36A présente une forme générale rectangulaire, en particulier carrée.

En variante, la section perpendiculaire à l'axe principal A-A' de la paroi latérale 36A présente une forme générale circulaire ou polygonale.

La paroi avant 36B est prévue pour le montage du dispositif de refroidissement 28.

La paroi 36 est munie d'au moins une ouverture 38 traversante pour le passage d'un flux d'air pour le refroidissement du moteur électrique 24.

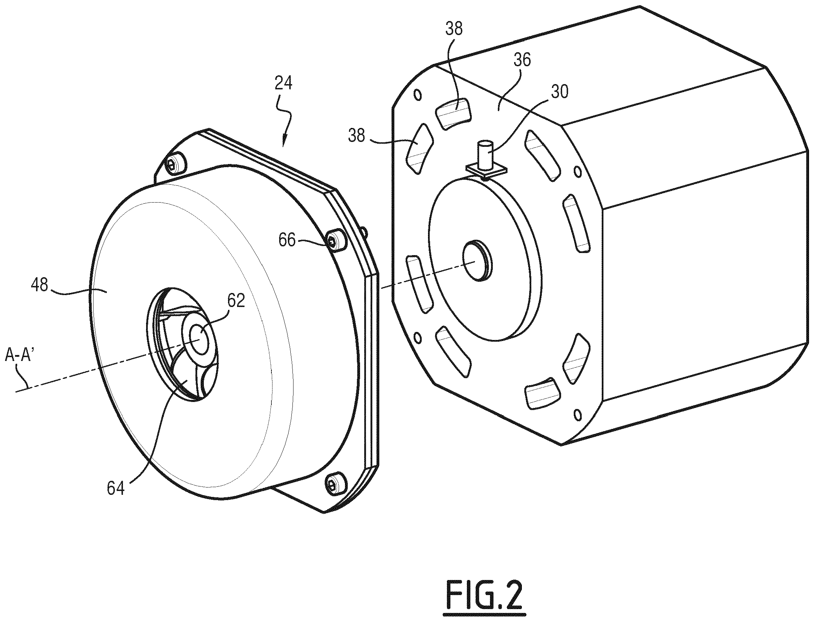

Avantageusement, comme visible sur la figure 2, la paroi 36 comprend une pluralité d'ouverture 38.

Les ouvertures 38 sont en particulier disposées sur la face avant 36B de la paroi 36.

Chaque canal de refroidissement 27 s'étend à la périphérie du stator 34.

Chaque canal de refroidissement 27 s'étend depuis l'une des ouvertures 38 et débouche à l'extérieur du carter 26 au niveau de la paroi arrière 36C. Chaque canal de refroidissement 27 est ainsi configuré pour être alimenté par le flux d'air via au moins l'une des ouverture(s) 38.

Chaque canal de refroidissement 27 est situé à la périphérie du moteur 24.

En particulier, chaque canal de refroidissement 27 est en contact avec la cloison extérieure 35 du moteur 24.

Avantageusement, chaque canal de refroidissement 27 s'étend le long de l'axe principal A-A'.

Ainsi, les canaux de refroidissement 27 s'étendent le long de l'axe principal A-A' depuis la paroi avant 36B vers la paroi arrière 36C.

Lors du fonctionnement du moteur électrique 24, celui-ci produit de la chaleur qu'il est nécessaire d'évacuer afin de garantir un bon fonctionnement du moteur électrique 24.

La circulation du flux d'air dans chaque canal de refroidissement 27 est représentée par les flèches visibles sur la figure 4.

Durant cette circulation, le flux d'air récupère la chaleur produite par le moteur électrique et l'évacue hors du carter 26, vers l'extérieur du véhicule 10.

Le dispositif de refroidissement 28 est configuré pour refroidir le moteur électrique 20.

En particulier, le dispositif de refroidissement 28 est configuré pour produire un flux d'air et l'envoyer dans chaque ouverture 38 afin de refroidir le moteur 24.

Le dispositif de refroidissement 28 présente une étendue transversale maximale L comprise entre 0,1 m et 1,6 m.

Le dispositif de refroidissement 28 comprend une enveloppe 40 et un motoventilateur 42.

La section perpendiculaire à l'axe principal A-A' de l'enveloppe 40 présente un contour de forme générale rectangulaire, en particulier carrée.

En variante, la section perpendiculaire à l'axe principal A-A' de l'enveloppe 40 présente un contour de forme générale circulaire ou polygonale.

En particulier, l'enveloppe 40 présente un contour correspondant à celui du carter 26 en vue suivant l'axe principal A-A.

L'enveloppe 40 possède une première face 48 et une deuxième face 50 opposée à la première face 48. Le dispositif de refroidissement 28 est prévu pour être fixé sur le carter 26 en appliquant l'enveloppe 40 contre le carter 26, plus particulièrement en appliquant la deuxième face 50 contre le carter 26.

La première face 48 présente avantageusement une forme générale convexe, et de préférence profilée.

La première face 48 possède une entrée d'air 52 pour permettre l'entrée d'air 52 à l'intérieur de l'enveloppe 40.

L'entrée d'air 52 présente avantageusement la forme d'une ouverture circulaire, située par exemple sensiblement au centre de la première face 48.

Avantageusement, l'entrée d'air 52 présente une étendue transversale maximale D comprise entre 20 % et 70 % de l'étendue transversale maximale L du dispositif de refroidissement 28.

La deuxième face 50 présente avantageusement une forme générale concave, en creux.

La deuxième face 50 définit avantageusement une cavité 54 située à l'extérieur du dispositif de refroidissement 28.

La deuxième face 50 présente une sortie d'air 56. La sortie d'air 56 de la deuxième face 50 est destinée à se raccorder fluidiquement à au moins une ouverture 38 du carter 26 pour l'alimentation en air de cette ouverture 38

Ici, la deuxième face 50 définit une unique sortie d'air 56 de forme annulaire située sensiblement à la périphérie de la deuxième face 50.

L'enveloppe 40 est par exemple réalisée en une première partie et une deuxième partie distinctes assemblées l'une avec l'autre, la première partie définissant la première face 48 et la deuxième partie 50 définissant la deuxième face de l'enveloppe 40.

Les deux parties de l'enveloppe 40 sont fixées ensemble, par exemple au moyens de vis.

L'enveloppe 40 est creuse et délimite un conduit de canalisation 58 d'air reliant l'entrée d'air 52 à la sortie d'air 56.

Le dispositif de refroidissement 28 est configuré pour générer le flux d'air dans le conduit de canalisation 58 d'air entre l'entrée d'air 52 et la sortie d'air 56 et ainsi alimenter la ou les ouverture(s) 38 avec le flux d'air.

En particulier, le dispositif de refroidissement 28 est configuré pour faire circuler un flux d'air axialement par rapport à l'axe principal A-A' par l'entrée d'air 52, le flux d'air s'écoulant ensuite en s'éloignant de l'axe principal A-A dans la portion du conduit de canalisation 58.

Le conduit de canalisation 58 est configuré pour réduire de manière continue la vitesse du flux d'air entre l'entrée d'air 52 et la sortie d'air 56.

Le conduit de canalisation 58 est donc un diffuseur.

En particulier, la vitesse du flux d'air dans le conduit de canalisation 58 se décompose en une composante tangentielle et une composante radiale par rapport à l'axe principal A-A'. La composante tangentielle est généralement supérieure à la composante radiale. Le ralentissement de la composante tangentielle suit une loi inversement proportionnelle à la distance à l'axe principal A-A'. Le flux d'air ralentit tangentiellement au fur et à mesure qu'il s'écarte de l'axe principal A-A' en progressant vers la sortie d'air 56. La composante radiale de la vitesse varie selon le rapport entre la section perpendiculaire au flux d'air à l'entrée du conduit de canalisation d'air 58 et la section perpendiculaire à la sortie du conduit de canalisation d'air 58.

Le conduit de canalisation d'air 58 est dimensionné de sorte que la vitesse absolue du flux d'air au niveau de la sortie d'air 56 soit inférieure à la vitesse du flux d'air au niveau de l'entrée d'air 54 grâce au ralentissement obtenu sur la composante tangentielle de la vitesse, et ce malgré l'accroissement éventuel de la vitesse radiale.

Ce ralentissement de la vitesse du flux d'air dans le conduit de canalisation d'air 58 permet de convertir la pression dynamique du flux d'air en pression statique utile. Cette récupération de pression statique permet de compenser les pertes de charges du flux d'air et de réduire le bruit aéraulique du dispositif de refroidissement 28 en évitant les fluctuations brutales de vitesse et de pression du flux d'air dues aux chocs et turbulences.

Le motoventilateur 42 est monté à l'intérieur de l'enveloppe 40.

Le motoventilateur 42 est configuré pour forcer la circulation d'air depuis l'entrée d'air 52 vers la sortie d'air 56.

En particulier, le motoventilateur 42 comprend une machine 60 électrique tournante possédant un arbre rotatif 62, et un ensemble de pales 64 fixées à l'arbre rotatif 62.

Le motoventilateur 42 est configuré pour aspirer un flux d'air axialement par rapport à l'axe principal A-A par l'entrée 52 et faire circuler ce flux d'air principalement radialement par rapport à l'axe principal A-A dans la portion du conduit de canalisation 58.

Le dispositif de refroidissement 28 est configuré pour être fixé par des moyens de fixation 66 amovibles sur le carter 26 en appliquant la deuxième face 50 de l'enveloppe 40 contre la paroi 36 du carter 26.

Lorsque le dispositif de refroidissement 28 et le carter 26 sont fixés entre eux, la sortie d'air 56 est en regard d'une ouverture 38.

Les moyens de fixation 66 sont par exemple des vis. Dans l'exemple de la figure 2, le dispositif de refroidissement 28 est en particulier fixé par quatre vis disposées aux quatre coins de l'enveloppe 40.

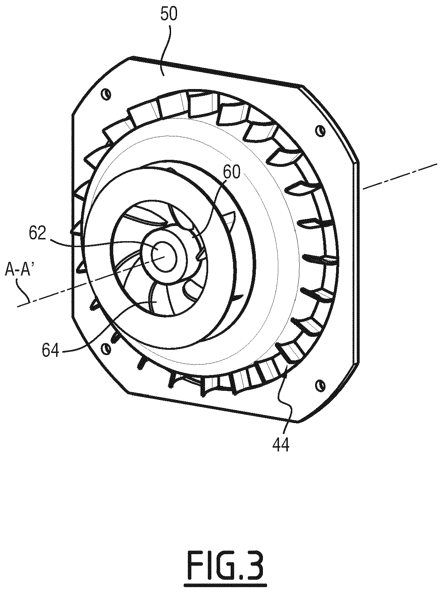

En option, comme illustré sur les Figures 3 et 4, le dispositif de refroidissement comprend des ailettes 44 situées à l'intérieur du conduit de canalisation 58.

Les ailettes 44 sont fixes par rapport à l'enveloppe 40.

L'orientation des ailettes 44 est déterminée en fonction de l'angle d'incidence du flux d'air au niveau des ailettes 44. Cette incidence dépend du rapport entre la composante tangentielle et la composante radiale de la vitesse du flux d'air.

Les ailettes 44 sont configurées pour orienter le flux d'air et pour limiter le tourbillonnement du flux d'air. Les ailettes 44 participent en outre au ralentissement du flux d'air dans le conduit de canalisation 58.

Le dispositif de refroidissement comprend de préférence un alimentation électrique 46 pour l'alimentation en électricité du motoventilateur 42, plus particulièrement pour alimenter en électricité la machine 60 électrique permettant ainsi la mise en rotation des pales 64.

Avantageusement, l'alimentation électrique 46 est indépendante de l'alimentation électrique du moteur électrique 24.

Ainsi, la vitesse de rotation du motoventilateur 42 peut être indépendante de la vitesse de rotation du rotor 32 du moteur 24.

Le dispositif de mesure de vitesse 30 est configuré pour mesurer la vitesse de rotation du rotor 32 du moteur électrique 24.

Le dispositif de mesure de vitesse 30 est situé à l'extérieur du carter 26, sur la paroi 36 du carter 26 munie des ouvertures 38 et prévue pour recevoir le dispositif de refroidissement 28.

Lorsque le dispositif de refroidissement 28 est monté sur ladite paroi 36 du carter 26, le dispositif de mesure de vitesse 30 est reçu dans la cavité 54 de la deuxième face 50, entre la deuxième face 50 et la paroi 36 du carter 26.

Le dispositif de mesure de vitesse 30 comprend par exemple une roue codeuse montée sur une extrémité de l'arbre de sortie du moteur électrique faisait saillie sur la paroi 36, et un capteur de vitesse propre à mesurer la vitesse de rotation de la roue codeuse et situé sur la paroi 36 du carter 26.

Un procédé de remplacement d'un dispositif de refroidissement 28 va maintenant être décrit.

Initialement, un ensemble de motorisation 16 est embarqué à bord d'un véhicule ferroviaire 10 et permet la fourniture d'énergie mécanique pour le déplacement du véhicule 10.

Puis, lorsqu'une opération de remplacement du dispositif de refroidissement 28 de l'ensemble de motorisation 16 est nécessaire pour cause de maintenance par exemple, le premier dispositif de refroidissement 28 est détaché du carter 26.

En particulier, les moyens de fixation 66 amovibles sont retirés afin de permettre la désolidarisation du premier dispositif de refroidissement 28 et du carter 26.

Puis, le procédé comprend une étape de remplacement du premier dispositif de refroidissement 28 par un autre dispositif de refroidissement 28.

Si l'accessibilité autour du moteur 24 le permet, le remplacement est réalisé sans dépose du moteur 24 du véhicule ferroviaire 10.

L'autre dispositif de refroidissement 28 est fixé au carter 26 via les moyens de fixation 66.

L'ensemble de motorisation 16 est alors de nouveau opérationnel.

On conçoit alors que la présente invention présente un certain nombre d'avantages.

L'invention permet un remplacement aisé et rapide du dispositif de refroidissement 28 uniquement en détachant les moyens de fixation 66 et sans avoir à démonter le carter 26.

Ainsi, la maintenance du dispositif de refroidissement 28 est facilitée et permet une disponibilité opérationnelle du moteur électrique 24 accrue.

L'invention permet en outre un remplacement du dispositif de refroidissement 28 par un autre dispositif de refroidissement 28 plus adapté au fonctionnement à prévoir du moteur 24. En particulier, il est possible d'adapter le dispositif de refroidissement 28 en fonction du point de fonctionnement prévu du moteur 24 en choisissant celui dont la géométrie du conduit de canalisation 58 est la plus adaptée.

De plus, le dispositif de refroidissement 28 est découplé du moteur 24. La vitesse de rotation du motoventilateur 42 est donc indépendant de la vitesse de rotation du rotor 32 et peut être ainsi adapté de façon optimale au point de fonctionnement du moteur 24.

Ainsi, une amélioration significative des performances de refroidissement du moteur 24 par le dispositif de refroidissement est obtenue.

L'invention permet également donc d'augmenter la durée de vie du moteur 24 et évite tout incident dû à une surchauffe de celui-ci.

Enfin, la récupération de pression statique dans le conduit de distribution 58 permet de compenser les pertes de charges et réduit fortement les bruits aérauliques.

## Revendications

1. Dispositif de refroidissement (28) d'un moteur électrique (24) de traction d'un véhicule (10), notamment d'un véhicule ferroviaire, le moteur électrique (24) étant entouré par un carter (26) possédant une paroi (36) munie d'au moins une ouverture (38) pour l'entrée d'un flux d'air pour le refroidissement du moteur électrique (24), le dispositif de refroidissement (28) comprenant :
- une enveloppe (40) possédant une première face (48) et une deuxième face (50) opposée, l'enveloppe (40) délimitant un conduit de canalisation (58) d'air reliant une entrée d'air (52) située sur la première face (48) à une unique sortie d'air (56) annulaire définie par la deuxième face (50) située sur la deuxième face (50), sensiblement à la périphérie de la deuxième face (50); et
- un motoventilateur (42) monté à l'intérieur de l'enveloppe (40) et configuré pour forcer la circulation du flux d'air depuis l'entrée d'air (52) vers la sortie d'air (56) ;
le dispositif de refroidissement (28) étant configuré pour être fixé de manière amovible sur le carter (26) en appliquant la deuxième face (50) de l'enveloppe (40) contre la paroi (36) du carter (26), la sortied'air (56) étant en regard de la ou de l'une des ouverture(s) (38) lorsque le dispositif de refroidissement (28) est fixé sur le carter (26),
le dispositif de refroidissement (28) étant configuré pour générer le flux d'air dans le conduit de canalisation (58) d'air entre l'entrée d'air (52) et la sortie d'air (56) et faire circuler un flux d'air par l'entrée d'air (52) axialement par rapport à un axe principal (A-A') d'un ensemble de motorisation comprenant un moteur électrique (24) et le dispositif de refroidissement (28), le motoventilateur (42) étant configuré pour aspirer le flux d'air axialement par rapport à l'axe principal (A-A') par l'entrée d'air (52) et faire circuler ce flux d'air principalement radialement par rapport à l'axe principal (A-A') dans le conduit de canalisation (58), le flux d'air s'écoulant ensuite en s'éloignant de l'axe principal (A-A') dans le conduit de canalisation (58).

2. Dispositif de refroidissement (28) selon la revendication 1, dans lequel le conduit de canalisation (58) est configuré pour réduire de manière continue la vitesse du flux d'air entre l'entrée et la sortie d'air.

3. Dispositif de refroidissement (28) selon l'une quelconque des revendications précédentes, comprenant en outre une pluralité d'ailettes (44) disposées dans le conduit de canalisation (58) d'air.

4. Dispositif de refroidissement (28) selon l'une quelconque des revendications précédentes, comprenant une alimentation électrique (46) pour le motoventilateur (42) indépendante d'une alimentation électrique du moteur électrique (24).

5. Dispositif de refroidissement (28) selon l'une quelconque des revendications précédentes, dans lequel la deuxième face (50) de l'enveloppe (40) définit une cavité (54).

6. Ensemble de motorisation (16) comprenant :
- un moteur électrique (24) de traction d'un véhicule (10),
- un carter (26) entourant le moteur électrique (24), le carter (26) comprenant une paroi (36) munie d'au moins une ouverture (38) traversante pour le passage d'un flux d'air pour le refroidissement du moteur électrique (24) ;
- un dispositif de refroidissement (28) selon l'une quelconque des revendications précédentes, le dispositif de refroidissement (28) étant fixé de manière amovible sur le carter, la deuxième face (50) de l'enveloppe (40) étant appliquée contre la paroi (36) du carter (26) de sorte que le flux d'air sortant par la sortie d'air (56) de l'enveloppe (40) alimente la ou les ouverture(s) (38) de ladite paroi (36).

7. Ensemble de motorisation (16) selon la revendication 6, dans lequel le moteur électrique (24) comprend un rotor (32) s'étendant selon l'axe principal (A-A') et un stator (34) s'étendant autour du rotor (32), l'ensemble de motorisation (16) comprenant au moins un canal de refroidissement (27) alimenté par la ou les ouverture(s) (38) et s'étendant à la périphérie du stator (34).

8. Ensemble de motorisation (16) selon la revendication 7, le dispositif de refroidissement (28) étant selon la revendication 5, dans lequel l'ensemble de motorisation (16) comprend un dispositif de mesure de la vitesse (30) de rotation du rotor (32) du moteur électrique (24), le dispositif de mesure de la vitesse (30) étant disposé dans la cavité (54) entre la deuxième face (50) et la paroi (36) du carter (26).

9. Véhicule (10), notamment véhicule ferroviaire, comprenant au moins un ensemble de motorisation (16) selon l'une quelconque des revendications 6 à 8.

10. Procédé de remplacement comprenant les étapes suivantes :
- fourniture d'un ensemble de motorisation (16) selon l'une quelconques des revendications 6 à 8 ;
- détachement et remplacement du dispositif de refroidissement (28) par un autre dispositif de refroidissement (28) selon l'une quelconque des revendications 1 à 5.

## Patentansprüche

1. Kühlvorrichtung (28) eines Elektromotors (24) für den Antrieb eines Fahrzeugs (10), insbesondere eines Schienenfahrzeugs, wobei der Elektromotor (24) von einem Gehäuse (26) umgeben ist, das eine Wand (36) besitzt, die mit mindestens einer Öffnung (38) für den Eintritt eines Luftstroms zur Kühlung des Elektromotors (24) versehen ist, wobei die Kühlvorrichtung (28) umfasst:
- eine Hülle (40) mit einer ersten Seite (48) und einer gegenüberliegenden zweiten Seite (50), wobei die Hülle (40) einen Luftleitungskanal (58) begrenzt, der einen Lufteinlass (52), der sich an der ersten Seite (48) befindet, mit einem einzelnen ringförmigen Luftauslass (56) verbindet, der durch die zweite Seite (50) definiert ist, die auf der zweiten Seite (50) im Wesentlichen am Umfang der zweiten Seite (50) angeordnet ist; und
- einen Motorlüfter (42), der innerhalb der Hülle (40) angebracht und so konfiguriert ist, dass er die Zirkulation des Luftstroms vom Lufteinlass (52) zum Luftauslass (56) erzwingt;
die Kühlvorrichtung (28) so konfiguriert ist, dass sie abnehmbar an dem Gehäuse (26) befestigt werden kann, indem die zweite Seite (50) der Hülle (40) gegen die Wand (36) des Gehäuses (26) gedrückt wird, wobei der Luftauslass (56) der oder einer der Öffnungen (38) gegenüberliegt, wenn die Kühlvorrichtung (28) an dem Gehäuse (26) befestigt ist,
wobei die Kühlvorrichtung (28) so konfiguriert ist, dass sie den Luftstrom in dem Luftleitungskanal (58) zwischen dem Lufteinlass (52) und dem Luftauslass (56) erzeugt und einen Luftstrom durch den Lufteinlass (52) axial in Bezug auf eine Hauptachse (A-A') einer Motorisierungsanordnung zirkulieren lässt, die einen Elektromotor (24) und die Kühlvorrichtung (28) umfasst, wobei der Motorlüfter (42) konfiguriert ist, um den Luftstrom axial in Bezug auf die Hauptachse (A-A') durch den Lufteinlass (52) anzusaugen und diesen Luftstrom hauptsächlich radial in Bezug auf die Hauptachse (A-A') durch den Luftleitungskanal (58) zu leiten, wobei der Luftstrom dann von der Hauptachse (A-A') weg durch den Luftleitungskanal (58) strömt.

2. Kühlvorrichtung (28) nach Anspruch 1, wobei der Luftleitungskanal (58) so konfiguriert ist, dass er die Geschwindigkeit des Luftstroms zwischen dem Lufteinlass und dem Luftauslass kontinuierlich reduziert.

3. Kühlvorrichtung (28) nach einem der vorhergehenden Ansprüche, die außerdem eine Vielzahl von Rippen (44) umfasst, die in dem Luftleitungskanal (58) angeordnet sind.

4. Kühlvorrichtung (28) nach einem der vorhergehenden Ansprüche, mit einer Stromversorgung (46) für den Motorlüfter (42), die unabhängig von einer Stromversorgung des Elektromotors (24) ist.

5. Kühlvorrichtung (28) nach einem der vorhergehenden Ansprüche, wobei die zweite Seite (50) der Hülle (40) einen Hohlraum (54) definiert.

6. Motorisierungsanordnung (16), umfassend:
- einen Elektromotor (24) für den Antrieb eines Fahrzeugs (10),
- ein Gehäuse (26), das den Elektromotor (24) umgibt, wobei das Gehäuse (26) eine Wand (36) mit mindestens einer Öffnung (38) für den Durchgang eines Luftstroms zur Kühlung des Elektromotors (24) aufweist;
- eine Kühlvorrichtung (28) nach einem der vorhergehenden Ansprüche, wobei die Kühlvorrichtung (28) lösbar an dem Gehäuse befestigt ist, wobei die zweite Seite (50) der Hülle (40) an der Wand (36) des Gehäuses (26) anliegt, so dass der durch den Luftauslass (56) der Hülle (40) austretende Luftstrom die Öffnung(en) (38) in der Wand (36) versorgt.

7. Motorisierungsanordnung (16) nach Anspruch 6, wobei der Elektromotor (24) einen Rotor (32) umfasst, der sich entlang der Hauptachse (A-A') erstreckt, und einen Stator (34), der sich um den Rotor (32) herum erstreckt, wobei die Motorisierungsanordnung (16) mindestens einen Kühlkanal (27) umfasst, der durch die Öffnung(en) (38) gespeist wird und sich am Umfang des Stators (34) erstreckt.

8. Motorisierungsanordnung (16) nach Anspruch 7, wobei die Kühlvorrichtung (28) nach Anspruch 5 ist, wobei die Motorisierungsanordnung (16) eine Vorrichtung zur Messung der Drehzahl (30) des Rotors (32) des Elektromotors (24) umfasst, wobei die Vorrichtung zur Messung der Drehzahl (30) in dem Hohlraum (54) zwischen der zweiten Seite (50) und der Wand (36) des Gehäuses (26) angeordnet ist.

9. Fahrzeug (10), insbesondere Schienenfahrzeug, umfassend mindestens eine Motorisierungsanordnung (16) nach einem der Ansprüche 6 bis 8.

10. Austauschverfahren, umfassend die folgenden Schritte:
- das Bereitstellen einer Motorisierungsanordnung (16) nach einem der Ansprüche 6 bis 8;
- Abtrennen und Ersetzen der Kühlvorrichtung (28) durch eine andere Kühlvorrichtung (28) nach einem der Ansprüche 1 bis 5.

## Claims

1. Cooling device (28) for an electric traction motor (24) of a vehicle (10), in particular a rail vehicle, the electric motor (24) being surrounded by a casing (26) having a wall (36) provided with at least one opening (38) for the entry of a flow of air for cooling the electric motor (24), the cooling device (28) comprising:
- an casing (40) having a first wall (48) and an opposite second wall (50), the casing (40) delimiting an air duct (58) connecting an air inlet (52) situated on the first wall (48) to a single annular air outlet (56) defined by the second wall (50) located on the second wall (50), substantially at the periphery of the second wall (50); and
- a motorised fan (42) mounted inside the casing (40) and configured to force the flow of air from the air inlet (52) to the air outlet (56);
the cooling device (28) being configured to be removably fixed to the casing (26) by applying the second wall (50) of the casing (40) against the wall (36) of the casing (26), the air outlet (56) facing the opening(s) (38) when the cooling device (28) is fixed to the casing (26),
the cooling device (28) being configured to generate the air flow in the air duct (58) between the air inlet (52) and the air outlet (56) and to circulate an air flow through the air inlet (52) axially with respect to a main axis (A-A') of a motor assembly comprising an electric motor (24) and the cooling device (28), the motorised fan (42) being configured to suck in the flow of air through the air inlet (52) and to circulate this air flow mainly radially with respect to axis (A-A') in the air duct (58), the air flow then flowing away from the main axis (A-A') in the air duct (58).

2. A cooling device (28) as claimed in claim 1, wherein the air duct (58) is configured to continuously reduce the velocity of the airflow between the air inlet and outlet.

3. Cooling device (28) according to any of the preceding claims, further comprising a plurality of fins (44) arranged in the air duct (58).

4. Cooling device (28) according to any of the preceding claims, comprising an electrical supply (46) for the motorised fan (42) independent of an electrical supply to the electric motor (24).

5. A cooling device (28) according to any one of the preceding claims, in which the second wall (50) of the casing (40) defines a cavity (54).

6. A motorisation assembly (16) comprising:
- an electric traction motor (24) for a vehicle (10),
- a casing (26) surrounding the electric motor (24), the casing (26) comprising a wall (36) provided with at least one through opening (38) for the passage of a flow of air for cooling the electric motor (24);
- a cooling device (28) according to any one of the preceding claims, the cooling device (28) being removably fixed to the casing, the second side (50) of the casing (40) being applied against the wall (36) of the casing (26) so that the flow of air leaving through the air outlet (56) of the casing (40) feeds the opening(s) (38) in the said wall (36).

7. A motorisation assembly (16) as claimed in claim 6, wherein the electric motor (24) comprises a rotor (32) extending along the main axis (A-A') and a stator (34) extending around the rotor (32), the motorisation assembly (16) comprising at least one cooling channel (27) fed by the opening(s) (38) and extending around the periphery of the stator (34).

8. A motorisation assembly (16) according to claim 7, the cooling device (28) being according to claim 5, wherein the motorisation assembly (16) comprises a device for measuring the speed (30) of rotation of the rotor (32) of the electric motor (24), the speed measuring device (30) being arranged in the cavity (54) between the second side (50) and the wall (36) of the casing (26).

9. A vehicle (10), particularly a railway vehicle, comprising at least one motorisation assembly (16) according to any of claims 6 to 8.

10. A replacement method including the following steps:
- supply of a motorisation assembly (16) according to any one of claims 6 to 8;
- detachment and replacement of the cooling device (28) by another cooling device (28) according to any one of claims 1 to 5.
